# EUROPEAN PATENT SPECIFICATION

(11) **EP 4 124 517 B1**
(45) Date of publication and mention of the grant of the patent: **20.11.2024**
(21) Application number: 21188874.8
(22) Date of filing: 30.07.2021
(51) Int. Cl.: B60S 1/34, B60S 1/48, B62D 25/08

(54) **A WINDSHIELD WIPER COWL ASSEMBLY WITH A FLUSH-MOUNTED INSET HOSE CONNECTOR**
WINDSCHUTZSCHEIBENWISCHERHAUBENANORDNUNG MIT EINEM BÜNDIG MONTIERTEN EINGESETZTEN SCHLAUCHVERBINDER
ENSEMBLE BANDEAU DE CARROSSERIE ESSUIE-GLACE DOTÉ D'UN CONNECTEUR DE TUYAU ENCASTRÉ

(43) Date of publication of application: 01.02.2023
(73) Proprietor: Valeo Autosystemy SP. Z.O.O., 32-050 Skawina (PL)
(72) Inventor: GUBALA, Radoslaw, 78322 LE MESNIL SAINT DENIS (FR); GORCE, Stéphane, 78322 LE MESNIL SAINT DENIS (FR)
(74) Representative: Valeo Visibility

(56) References cited:
- EP-A1- 3 381 754
- WO-A1-91/08933
- CN-A- 102 935 836
- CN-A- 103 600 725
- DE-A1- 102008 063 112

## Description

### Technical Field

This disclosure pertains to a vehicle windshield wiper cowl assembly comprising a protective cowl panel adapted to be mounted on the bodywork of a vehicle at the lower end of the vehicle's windshield, the cowl panel having a shaft opening for the pivot shaft of a windshield wiper, the shaft opening having a circumferential border area with a front side and a back side, wherein the border area front side defines a circumferential bordering surface, and a hose connector having a back face and a front face, wherein the hose connector is set into the cowl panel's shaft opening so that the hose connector is bordered by the shaft opening's circumferential border area.

### Background Art

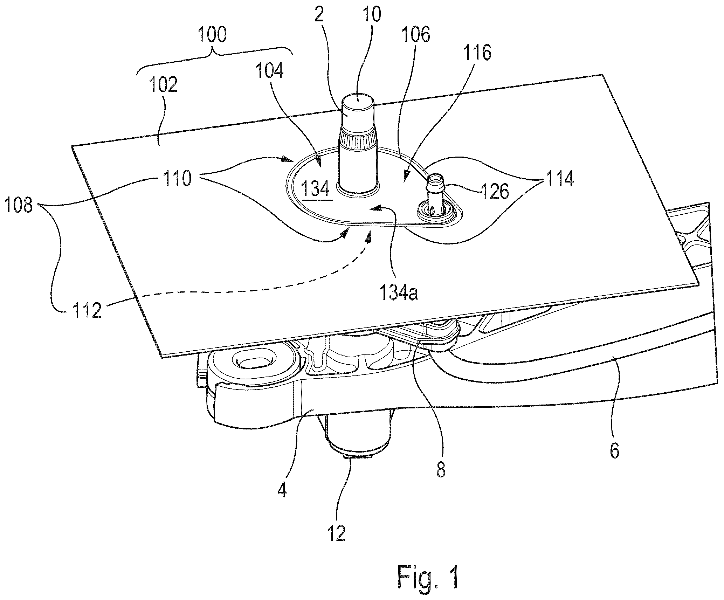

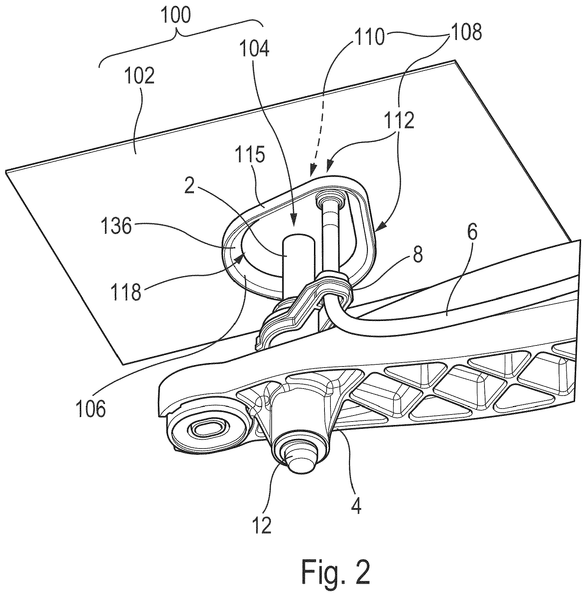

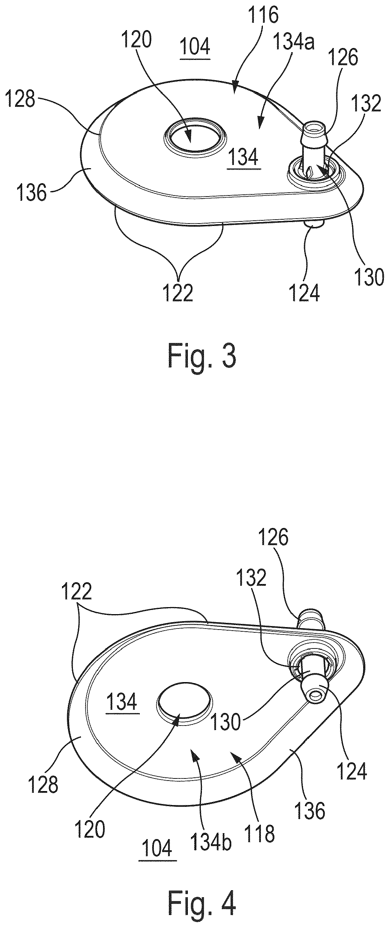

Such a vehicle windshield wiper cowl assembly is known from document JP2010-012815A, cf. its Figs. 1 and 2. This known cowl assembly comprises an outer cowl panel 17, an inner cowl panel 16 and an oval rubber grommet 40, which acts as a hose connector for two washer fluid hoses 35 and 38. The grommet 40 is set into a through-hole 16a of the inner cowl panel 16 and provides a watertight seal, which prevents water from entering the car body. As best seen in Fig. 3, the front face 41 b of the grommet 40 has a cup shape with a protruding circumferential sealing lip 47. The sealing lip 47 is in pressure contact with an inner surface 17b of the outer cowl panel 17, cf. Fig. 2.

In this known configuration, rainwater may collect in the recess defined by the grommet's front face 41b. This is undesirable since the rainwater pool in the recess may degrade the outer cowl panel 17.

The document EP 3 381 754 A1 discloses a further configuration for a vehicle windshield wiper cowl assembly as known in the art.

### Summary

In view of the above, it is an object of the present disclosure to provide a windshield wiper cowl assembly, which allows for the connection of washer fluid hoses therethrough, and which deflects rainwater effectively.

According to the present disclosure, this object is achieved with a vehicle windshield wiper cowl assembly according to claim 1.

Thanks to the inset hose connector, an assembly-line worker can easily and quickly connect a first washer fluid hose from below the cowl assembly, and a second washer fluid hose from above the cowl assembly.

Furthermore, since the front face of the hose connector is on the same level as the surrounding cowl panel surface, rainwater hitting the cowl assembly on or close to the hose connector quickly drains off. Accordingly, there is very little accumulation of rainwater on the cowl assembly.

The following features can be optionally implemented, separately or in combination:
- the hose connector has a through-hole for receiving the pivot shaft of a windshield wiper;
- the outer circumference of the hose connector is fitted with a watertight seal, which, preferably, is made of rubber;
- the hose connector is made of a rigid material, such as rigid plastic;
- the hose connector has a fluid inlet port on its back face and a fluid outlet port on its front face, both ports being adapted for connecting a washer fluid hose thereto;
- a check-valve is arranged in the fluid inlet port, the check-valve preventing a backward flow of washer fluid from the fluid outlet port to the fluid inlet port;
- the fluid inlet port and the fluid outlet port are both part of an integral fluid tube, which traverses the front and back face of the hose connector, wherein, preferably, the hose connector comprises a fastening hole and the fluid tube is removably fastened in the fastening hole;
- the hose connector has a base plate whose front surface is flush with the circumferential bordering surface defined by the border area front side and delimits the extent of the hose connector's front face;
- the hose connector's back face has an outer circumferential skirt surrounding the base plate;
- the border area back side of the cowl panel's shaft opening comprises a circumferential collar, which surrounds the outer circumferential skirt of the hose connector;
- the hose connector is also an electrical connector, which has an electrical interface allowing to connect the electrical wiring of an electrical heating device of a heated windshield wiper to an electrical power source behind the cowl panel;
- the electrical interface is a plug-and-socket assembly with an electrical socket and an electrical plug received in the electrical socket
- the plug-and-socket assembly is mounted in an aperture formed in the hose connector;
- the hose connector has a mounting lug, and the electrical socket is mounted on the mounting lug, preferably via a joint made of a mounting rail and a pair of mounting brackets clasping the mounting rail.

The present disclosure also relates to a motor vehicle comprising a cowl assembly as defined above.

### Brief Description of the Drawings

Preferred embodiments of the present disclosure will now be described in detail with reference to the appended drawings, in which:
**Fig. 1**
   [Fig. 1] is a front perspective view of a cowl assembly according to a first embodiment of the present disclosure.
**Fig. 2**
   [Fig. 2] is a back perspective view of the cowl assembly of Fig. 1.
**Fig. 3**
   [Fig. 3] is a front perspective view of the hose connector of the cowl assembly of Figs. 1 and 2.
**Fig. 4**
   [Fig. 4] is a back perspective view of the hose connector of Fig. 3.
**Fig. 5**

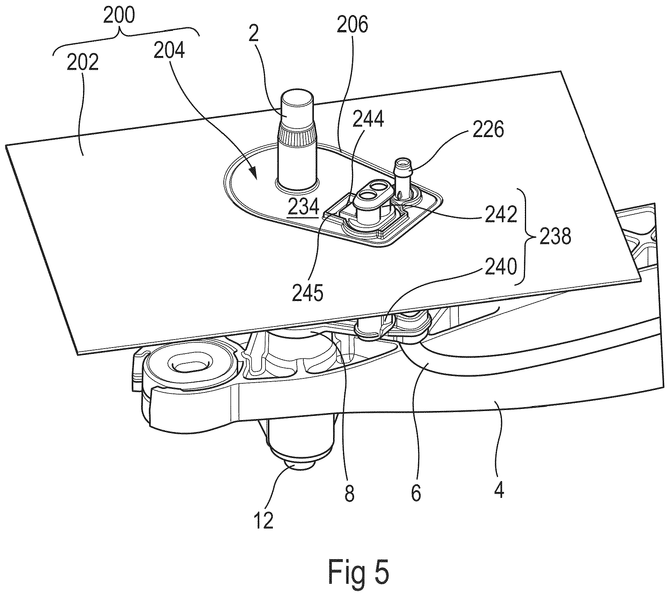

   [Fig. 5] is a front perspective view of a cowl assembly according to a second embodiment of the present disclosure.
**Fig. 6**

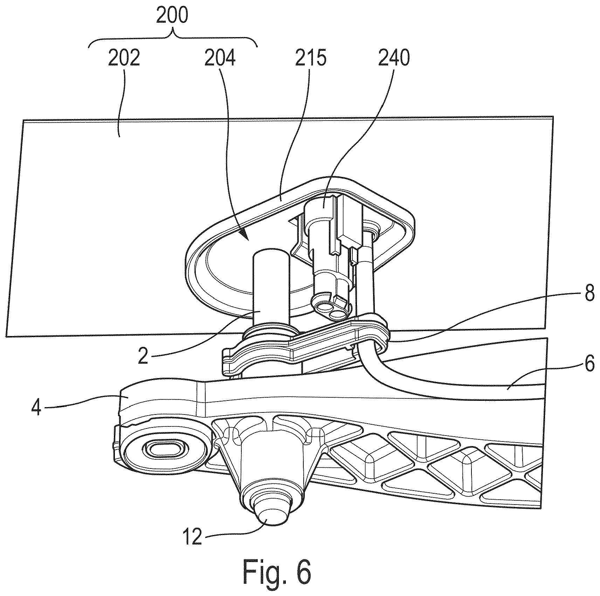

   [Fig. 6] is a back perspective view of the cowl assembly of Fig. 5.
**Fig. 7**

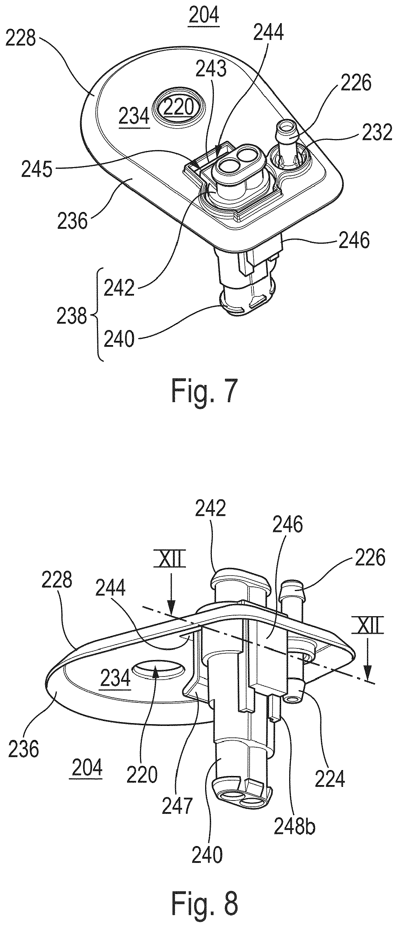

   [Fig. 7] is a front perspective view of the hose connector of the cowl assembly of Figs. 5 and 6.
**Fig. 8**
   [Fig. 8] is a back perspective view of the hose connector of Fig. 7.
**Fig. 9**

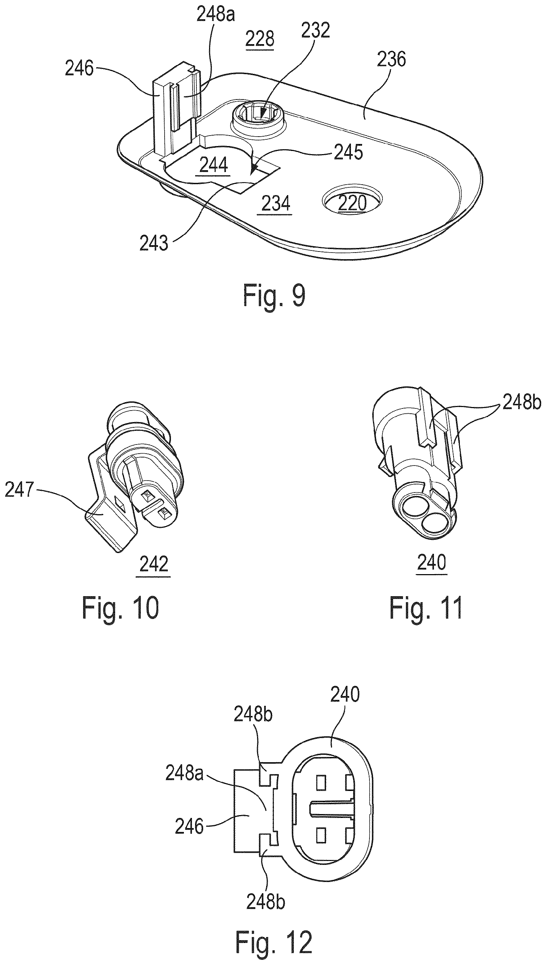

   [Fig. 9] is a back perspective view of the main body of the hose connector of Figs. 7 and 8.
**Fig. 10**
   [Fig. 10] is a perspective view of the electrical plug of the hose connector of Figs. 7 and 8.
**Fig. 11**
   [Fig. 11] is a perspective view of the electrical socket of the hose connector of Figs. 7 and 8.
**Fig. 12**
   [Fig. 12] is a cross-sectional view taken along line XII-XII in Fig. 8.
**Fig. 13**

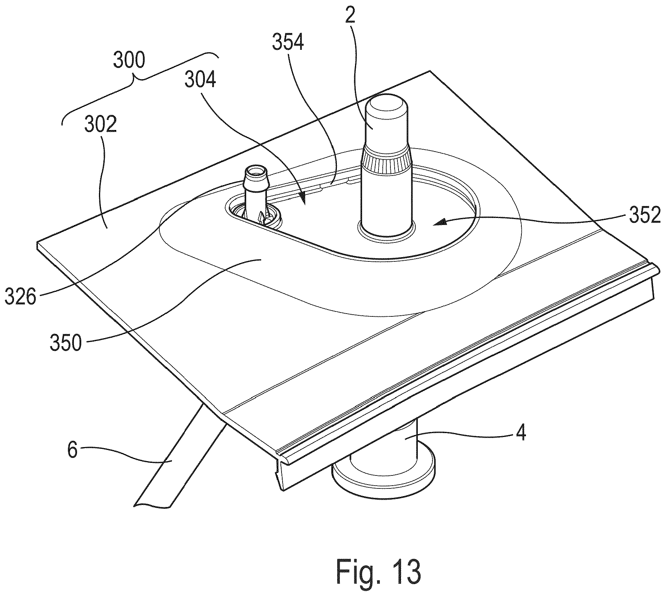

   [Fig. 13] is a front perspective view of an exemplary cowl assembly with a different configuration than the embodiments of the present disclosure and not fallling under claim 1.
**Fig. 14**

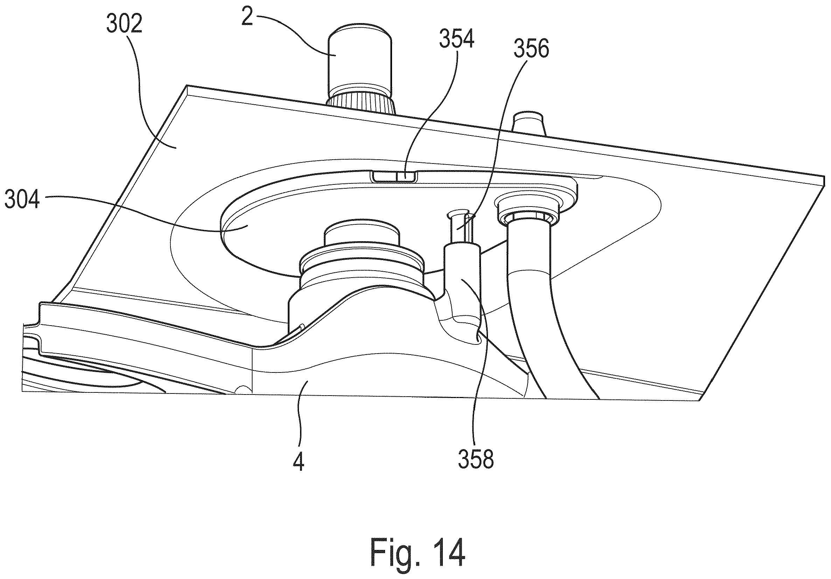

   [Fig. 14] is a back perspective view of the cowl assembly of Fig. 13.

### Description of Embodiments

The present disclosure is concerned with improvements to windshield wiper cowl assemblies, which are used as parts of vehicles, such as motor vehicles. The main component of such cowl assemblies is a cowl panel. Such a cowl panel is mounted on the bodywork of a vehicle at the lower end of the vehicle's windshield. Its main purpose is to cover and protect the driving linkage of the one or more windshield wipers from dirt, rainwater, debris or the like. Typically, such cowl panels have at least one shaft opening for the pivot shaft of a windshield wiper.

In the present disclosure, the focus is on cowl assemblies that are especially suited for use with nozzle windshield wipers, i.e. windshield wipers having integrated nozzles for the spraying of washer fluid. These particular cowl assemblies comprise means allowing the washer fluid, which is supplied from a reservoir in the vehicle's body, to cross the cowl panel to reach the nozzle windshield wiper. This type of cowl assembly may be referred to as a cowl assembly with washer fluid transit.

The figures show three different variants of cowl assemblies with washer fluid transit, wherein the first two variants are embodiments of the present disclosure, and the third variant is for further illustration.

In the present context, the terms "front" and "back" are understood to have the following meaning:
The term "front" indicates that the corresponding element faces towards the outside of the vehicle when it is in an operational state and part of the vehicle.

The term "back" indicates that the corresponding element faces towards the inside of the vehicle when it is in an operational state and part of the vehicle.

### Cowl assembly with washer fluid transit - first embodiment

Referring to Figs. 1 to 4, we will now describe a first embodiment 100 of a cowl assembly according to the present disclosure.

Figs. 1 and 2 show the cowl assembly 100 together with a pivot shaft 2, a shaft supporting member 4, a washer fluid hose 6 and a hose clip 8.

The pivot shaft 2 is made for pivoting a windshield wiper in a reciprocating manner. To that end, the head of a windshield wiper arm may be attached to the top end 10 of the pivot shaft 2. The base 12 of the pivot shaft 2 is received in the shaft supporting member 4.

The washer fluid hose 6 is secured to the shaft supporting member 4 via the hose clip 8.

The cowl assembly 100 comprises a protective cowl panel 102 and a hose connector 104.

The protective cowl panel 102 is adapted to be mounted on the bodywork of a vehicle at the lower end of the vehicle's windshield. The cowl panel 102 has a shaft opening 106. The pivot shaft 2 extends through the shaft opening 106. The shaft opening 106 has a circumferential border area 108. A front side 110 of the border area 108 is visible in Fig.1, and a back side 112 of the border area 108 is visible in Fig. 2. The front side 110 of the border are 108 defines a circumferential bordering surface 114.

Here, the back side 112 of the border area 108 comprises a circumferential collar 115.

The hose connector 104 is set into the shaft opening 106 of the cowl panel 102. Accordingly, the hose connector 104 is bordered by the circumferential border area 108 of the shaft opening 106.

According to the present disclosure, a front face 116 of the hose connector 104 is flush with the circumferential bordering surface 114 defined by the front side 110 of the border area 108.

The hose connector 104 is shown on its own in Figs. 3 and 4. It may be made of a rigid material, such as rigid plastic.

The front face 116 of the hose connector 104 is visible in Fig. 3, and a back face 118 of the hose connector 104 is visible in Fig. 4.

The hose connector 104 has a through-hole 120 for receiving the pivot shaft 2.

The outer circumference 122 of the hose connector 104 may be fitted with a watertight seal. This seal may be made of rubber.

The hose connector 104 has a fluid inlet port 124 on its back face 118 and a fluid outlet port 126 on its front face 116. In Figs. 1 and 2, the washer fluid hose 6 is connected to the fluid inlet port 124. Likewise, another washer fluid hose, which is secured to a windshield wiper to be attached to the pivot shaft 2, may be connected to the fluid outlet port 126.

A check-valve may be arranged in the fluid inlet port 124. The purpose of such a check-valve is to prevent a backward flow of washer fluid from the fluid outlet port 126 to the fluid inlet port 124.

In the present embodiment, the hose connector 104 consists of a plate-shaped main body 128 and an integral fluid tube 130 fastened to the main body 128. In this case, the fluid inlet port 124 and the fluid outlet port 126 are both part of the fluid tube 130.

The fluid tube 130 traverses the front face 116 and the back face 118 of the hose connector 104. Preferably, the fluid tube 130 is removably fastened in a fastening hole 132, which is formed in the main body 128.

The main body 128 has a base plate 134 and an outer circumferential skirt 136 surrounding the base plate 134. The base plate 134 has a front surface 134a and a back surface 134b. The front surface 134a of the base plate 134 delimits the extent of the front face 116 of the hose connector 104.

In the present example, the base plate 134 is drop-shaped.

Turning back to Fig. 1, one can see that the front surface 134a of the base plate 134 is flush with the circumferential bordering surface 114.

With reference to Fig. 2, the circumferential collar 115 of the cowl panel's opening 106 surrounds the outer circumferential skirt 136 of the hose connector 104.

### Cowl assembly with washer fluid transit - second embodiment

With reference to Figs. 5 to 12, we will now describe a second embodiment 200 of a cowl assembly according to the present disclosure.

In the following, only the differences with respect to the first embodiment 100 will be detailed. For similar elements, reference is made to the description above.

In this second embodiment, the hose connector 204 doubles as an electrical connector. This embodiment is dedicated to heated nozzle windshield wipers, i.e. nozzle windshield wipers, which have an integrated electrical heating device. The heating device improves the cleaning action of the nozzle windshield wiper during winter times.

To this end, the hose connector 204 has an electrical interface 238. The electrical interface 238 allows to connect the electrical wiring of the heating device of a heated windshield wiper to an electrical power source behind the cowl panel 202.

Here, the electrical interface is a plug-and-socket assembly 238 with an electrical socket 240 and an electrical plug 242 received in the electrical socket 240.

As can be seen in Fig. 9, an aperture 244 having an edge 243 is formed in the main body 228 of the hose connector 204. The plug-and-socket assembly 238 is mounted in this aperture 244. The aperture 244 and the fastening hole 232 are preferably arranged side by side.

As best apparent from Fig. 7, the plug-and-socket assembly 238 does not take up the whole space defined by the aperture 244. Rather, there is a residual clearance 245 between the electrical plug 242 and the edge 243 of the aperture 244. This clearance 245 gives access to a latching clip 247 of the electrical plug 242 (cf. Fig. 10). Thanks to the clearance 245, the clip 247 can be unlatched from the electrical socket 240 and the plug 242 unplugged.

The main body 228 also has a mounting lug 246, which is located next to the aperture 244, and which protrudes from the base plate 234. The electrical socket 240 is mounted on the mounting lug 246. The corresponding mounting joint may consist of a mounting rail 248a and a pair of mounting brackets 248b clasping the mounting rail 248a, cf. Fig. 12.

Here, the mounting brackets 248b are part of the electrical socket 240, and the mounting rail 248a is arranged on the mounting lug 246. This could of course be interchanged.

### Cowl assembly with washer fluid transit - illustrative example

Figs. 13 and 14 show a cowl assembly 300 with a cowl panel 302 and a hose connector 304. In this unclaimed example, the hose connector 304 is surrounded by a circumferential ridge 350 formed in the cowl panel 302. This creates a depression 352, the bottom of which is taken up by the hose connector 304.

A scupper 354 in the hose connector 304 ensures that rainwater is evacuated from the depression 352 so that it cannot accumulate therein.

The hose connector 304 also has a mounting stud 356, which is inserted in a corresponding holding fixture 358 formed in the shaft supporting member 4.

### Advantages

As part of a complete windshield wiper system, the cowl assemblies of the present disclosure simplify the assembly of the windshield wiper system. In particular, washer fluid hoses, and, if applicable, electrical wires, can be connected with ease.

The cowl assemblies also have a slim design, which is particularly suited for passenger cars.

Furthermore, the cowl assemblies also have good rainwater deflection properties.

## Claims

1. A vehicle windshield wiper cowl assembly (100) comprising:
a. a protective cowl panel (102) adapted to be mounted on the bodywork of a vehicle at the lower end of the vehicle's windshield, the cowl panel (102) having a shaft opening (106) for the pivot shaft (2) of a windshield wiper, the shaft opening (106) having a circumferential border area (108) with a front side (110) and a back side (112), wherein the border area front side (110) defines a circumferential bordering surface (114); and
b. a hose connector (104) having a front face (116), and a base plate (134), a front surface (134a) of the base plate being flush with the circumferential bordering surface (114) defined by the border area front side (110) and delimiting the extent of the hose connector front face (116), and a back face (118) having an outer circumferential skirt (136) surrounding the base plate (134), wherein the hose connector is set into the cowl panel's shaft opening (106) so that the hose connector (104) is bordered by the shaft opening's circumferential border area (108);
wherein the front face (116) of the hose connector (104) is flush with the circumferential bordering surface (114) defined by the border area front side (110), **characterised in that** the border area back side (112) of the cowl panel shaft opening (106) comprising a circumferential collar (115) surrounding the outer circumferential skirt (136) of the hose connector.

2. The cowl assembly (100) of claim 1, wherein the hose connector (104) has a through-hole (120) for receiving the pivot shaft (2) of a windshield wiper.

3. The cowl assembly (100) of any one of the previous claims, wherein the outer circumference (122) of the hose connector (104) is fitted with a watertight seal, which, preferably, is made of rubber.

4. The cowl assembly (100) of any one of the previous claims, wherein the hose connector (104) is made of a rigid material, such as rigid plastic.

5. The cowl assembly (100) of any one of the previous claims, wherein the hose connector (104) has a fluid inlet port (124) on its back face (118) and a fluid outlet port (126) on its front face (116), both ports being adapted for connecting a washer fluid hose (6) thereto.

6. The cowl assembly (100) of claim 5, wherein a check-valve is arranged in the fluid inlet port (124), the check-valve preventing a backward flow of washer fluid from the fluid outlet port to the fluid inlet port.

7. The cowl assembly (100) of claim 5 or 6, wherein the fluid inlet port (124) and the fluid outlet port (126) are both part of an integral fluid tube (130), which traverses the front and back face of the hose connector (104), wherein, preferably, the hose connector comprises a fastening hole (132) and the fluid tube (130) is removably fastened in the fastening hole.

8. The cowl assembly (200) of any one of the previous claims, wherein the hose connector (204) is also an electrical connector, which has an electrical interface (238) allowing to connect the electrical wiring of an electrical heating device of a heated windshield wiper to an electrical power source behind the cowl panel (202).

9. The cowl assembly (200) of claim 8, wherein the electrical interface is a plug-and-socket assembly (238) with an electrical socket (240) and an electrical plug (242) received in the electrical socket (240).

10. The cowl assembly (200) of claim 9, wherein the plug-and-socket assembly is mounted in an aperture (244) formed in the hose connector.

11. The cowl assembly (200) of claim 9 or 10, wherein the hose connector (204) has a mounting lug (246), and the electrical socket (240) is mounted on the mounting lug, preferably via a joint made of a mounting rail (248a) and a pair of mounting brackets (248b) clasping the mounting rail.

12. A motor vehicle comprising the cowl assembly (100, 200) of any one of the previous claims.

## Patentansprüche

1. Windschutzscheibenwischerhaubenanordnung (100) eines Fahrzeugs, die Folgendes umfasst:
a. ein schützendes Windlaufblech (102), dazu angepasst, an der Karosserie eines Fahrzeugs am unteren Ende der Windschutzscheibe des Fahrzeugs montiert zu werden, wobei das Windlaufblech (102) eine Wellenöffnung (106) für die Schwenkachse (2) eines Windschutzscheibenwischers aufweist, wobei die Wellenöffnung (106) einen umlaufenden Randbereich (108) mit einer Vorderseite (110) und einer Rückseite (112) aufweist, wobei die Vorderseite des Randbereichs (110) eine umlaufende Randfläche (114) definiert; und
b. einen Schlauchanschluss (104) mit einer Vorderseite (116) und einer Grundplatte (134), wobei eine vordere Fläche (134a) der Grundplatte bündig mit der umlaufenden Randfläche (114) ist, die durch die Vorderseite (110) des Randbereichs definiert ist, und die Ausdehnung der Vorderseite (116) des Schlauchanschlusses begrenzt; und einer Rückseite (118) mit einer äußeren umlaufenden Schürze (136), die die Grundplatte (134) umgibt, wobei der Schlauchanschluss in die Wellenöffnung (106) des Windlaufblechs gesetzt ist, so dass der Schlauchanschluss (104) durch die umlaufende Randfläche der Wellenöffnung (108) begrenzt wird;
wobei die Vorderseite (116) des Schlauchanschlusses (104) bündig mit der durch die Vorderseite des Randbereichs (110) definierten umlaufenden Randfläche (114) ist, **dadurch gekennzeichnet, dass** die Rückseite des Randbereichs (112) der Windlaufblechwellenöffnung (106) einen umlaufenden Kragen (115) aufweist, der die äußere umlaufende Schürze (136) des Schlauchanschlusses umgibt.

2. Haubenanordnung (100) nach Anspruch 1, wobei der Schlauchanschluss (104) ein Durchgangsloch (120) zur Aufnahme der Schwenkachse (2) eines Windschutzscheibenwischers aufweist.

3. Haubenanordnung (100) nach einem der vorhergehenden Ansprüche, wobei der äußere Umfang (122) des Schlauchanschlusses (104) mit einer wasserdichten Dichtung versehen ist, die vorzugsweise aus Gummi besteht.

4. Haubenanordnung (100) nach einem der vorhergehenden Ansprüche, wobei der Schlauchanschluss (104) aus einem starren Material, wie z. B. starrem Kunststoff, besteht.

5. Haubenanordnung (100) nach einem der vorhergehenden Ansprüche, wobei der Schlauchanschluss (104) eine Fluideinlassöffnung (124) auf seiner Rückseite (118) und eine Fluidauslassöffnung (126) auf seiner Vorderseite (116) aufweist, wobei beide Öffnungen dazu angepasst sind, einen Scheibenwaschflüssigkeitsschlauchs (6) damit zu verbinden.

6. Haubenanordnung (100) nach Anspruch 5, wobei ein Rückschlagventil in der Fluideinlassöffnung (124) angeordnet ist, wobei das Rückschlagventil einen Rückfluss von Scheibenwaschflüssigkeit von der Fluidauslassöffnung zur Fluideinlassöffnung verhindert.

7. Haubenanordnung (100) nach Anspruch 5 oder 6, wobei die Fluideinlassöffnung (124) und die Fluidauslassöffnung (126) beide Teil eines integrierten Fluidrohrs (130) sind, das die Vorder- und Rückseite des Schlauchanschlusses (104) durchquert, wobei vorzugsweise der Schlauchanschluss ein Befestigungsloch (132) aufweist und das Fluidrohr (130) im Befestigungsloch entfernbar befestigt ist.

8. Haubenanordnung (200) nach einem der vorhergehenden Ansprüche, wobei der Schlauchanschluss (204) auch ein elektrischer Verbinder ist, der eine elektrische Schnittstelle (238) aufweist, die es ermöglicht, die elektrische Verkabelung einer elektrischen Heizvorrichtung eines beheizten Windschutzscheibenwischers mit einer elektrischen Stromquelle hinter dem Windlaufblech (202) zu verbinden.

9. Haubenanordnung (200) nach Anspruch 8, wobei die elektrische Schnittstelle eine Stecker-und-Buchsen-Anordnung (238) mit einer elektrischen Buchse (240) und einem elektrischen Stecker (242) ist, der in der elektrischen Buchse (240) aufgenommen wird.

10. Haubenanordnung (200) nach Anspruch 9, wobei die Stecker-und-Buchsen-Anordnung in einer Öffnung (244) montiert ist, die in dem Schlauchanschluss ausgebildet ist.

11. Haubenanordnung (200) nach Anspruch 9 oder 10, wobei der Schlauchanschluss (204) eine Befestigungslasche (246) aufweist und die elektrische Buchse (240) an der Befestigungslasche montiert ist, vorzugsweise über eine Verbindung aus einer Befestigungsschiene (248a) und einem Paar von Befestigungsbügeln (248b), die die Befestigungsschiene umschließen.

12. Kraftfahrzeug, das die Haubenanordnung (100, 200) nach einem der vorhergehenden Ansprüche umfasst.

## Revendications

1. Ensemble auvent (100) pour essuie-glace de pare-brise de véhicule, comprenant :
a. un panneau d'auvent de protection (102) adapté pour être monté sur la caisse d'un véhicule à l'extrémité inférieure du pare-brise du véhicule, le panneau d'auvent (102) ayant une ouverture d'arbre (106) pour l'arbre pivotant (2) d'un essuie-glace de pare-brise, l'ouverture d'arbre (106) ayant une zone de bord circonférentielle (108) avec un côté avant (110) et un côté arrière (112), dans lequel le côté avant de zone de bord (110) définit une surface de bordure circonférentielle (114) ; et
b. un raccord de tuyau flexible (104) ayant une face avant (116), et une plaque de base (134), une surface avant (134a) de la plaque de base étant au même niveau que la surface de bordure circonférentielle (114) définie par le côté avant de zone de bord (110) et délimitant l'étendue du raccord de tuyau flexible face avant (116), et une face arrière (118) ayant une jupe circonférentielle extérieure (136) entourant la plaque de base (134), dans lequel le raccord de tuyau flexible est placé dans l'ouverture d'arbre (106) du panneau d'auvent de telle sorte que le raccord de tuyau flexible (104) est bordé par la zone de bord circonférentielle (108) de l'ouverture d'arbre ;
dans lequel la face avant (116) du raccord de tuyau flexible (104) est au même niveau que la surface de bordure circonférentielle (114) définie par le côté avant de zone de bord (110), **caractérisé en ce que** le côté arrière de zone de bord (112) du panneau d'auvent ouverture d'arbre (106) comprenant un collier circonférentiel (115) entourant la jupe circonférentielle extérieure (136) du raccord de tuyau flexible.

2. Ensemble auvent (100) de la revendication 1, dans lequel le raccord de tuyau flexible (104) a un trou débouchant (120) destiné à recevoir l'arbre pivotant (2) d'un essuie-glace de pare-brise.

3. Ensemble auvent (100) de l'une quelconque des revendications précédentes, dans lequel la circonférence extérieure (122) du raccord de tuyau flexible (104) est équipée d'un joint étanche à l'eau, qui, de préférence, est fait de caoutchouc.

4. Ensemble auvent (100) de l'une quelconque des revendications précédentes, dans lequel le raccord de tuyau flexible (104) est fait d'un matériau rigide, tel que du plastique rigide.

5. Ensemble auvent (100) de l'une quelconque des revendications précédentes, dans lequel le raccord de tuyau flexible (104) a un orifice d'entrée de liquide (124) sur sa face arrière (118) et un orifice de sortie de liquide (126) sur sa face avant (116), les deux orifices étant adaptés pour raccorder un tuyau flexible de liquide lave-glace (6) à ceux-ci.

6. Ensemble auvent (100) de la revendication 5, dans lequel une soupape de non-retour est agencée dans l'orifice d'entrée de liquide (124), la soupape de non-retour empêchant un écoulement vers l'arrière de liquide lave-glace depuis l'orifice de sortie de liquide jusqu'à l'orifice d'entrée de liquide.

7. Ensemble auvent (100) de la revendication 5 ou 6, dans lequel l'orifice d'entrée de liquide (124) et l'orifice de sortie de liquide (126) font tous les deux partie d'un tube de liquide monobloc (130), qui traverse les faces avant et arrière du raccord de tuyau flexible (104), dans lequel, de préférence, le raccord de tuyau flexible comprend un trou de fixation (132) et le tube de liquide (130) est fixé de façon amovible dans le trou de fixation.

8. Ensemble auvent (200) de l'une quelconque des revendications précédentes, dans lequel le raccord de tuyau flexible (204) est également un raccord électrique, qui a une interface électrique (238) permettant de raccorder le câblage électrique d'un dispositif chauffant électrique d'un essuie-glace de pare-brise chauffé à une source d'énergie électrique derrière le panneau d'auvent (202).

9. Ensemble auvent (200) de la revendication 8, dans lequel l'interface électrique est un ensemble fiche-et-prise (238) avec une prise électrique (240) et une fiche électrique (242) reçue dans la prise électrique (240).

10. Ensemble auvent (200) de la revendication 9, dans lequel l'ensemble fiche-et-prise est monté dans une baie (244) formée dans le raccord de tuyau flexible.

11. Ensemble auvent (200) de la revendication 9 ou 10, dans lequel le raccord de tuyau flexible (204) a une oreille de montage (246), et la prise électrique (240) est montée sur l'oreille de montage, de préférence par l'intermédiaire d'une jonction faite d'un rail de montage (248a) et d'une paire de supports de montage (248b) étreignant le rail de montage.

12. Véhicule à moteur, comprenant l'ensemble auvent (100, 200) de l'une quelconque des revendications précédentes.
